# EUROPEAN PATENT SPECIFICATION

(11) **EP 4 391 291 B1**
(45) Date of publication and mention of the grant of the patent: **21.01.2026**
(21) Application number: 23212560.9
(22) Date of filing: 28.11.2023
(51) Int. Cl.: H02J 7/00, H04L 69/16

(54) **ENERGY STORAGE SYSTEM**
ENERGIESPEICHERSYSTEM
SYSTÈME DE STOCKAGE D'ÉNERGIE

(30) Priority: 20.12.2022 KR 20220179721
(43) Date of publication of application: 26.06.2024
(73) Proprietor: Samsung SDI Co., Ltd., Yongin-si, Gyeonggi-do 17084 (KR)
(72) Inventor: YOO, Jiwon, 17084 Yongin-si (KR)
(74) Representative: Marks & Clerk LLP

(56) References cited:
- CN-A- 112 467 239
- REINDL ANDREA ET AL: "Scalable, Decentralized Battery Management System Based on Self-organizing Nodes", 9 July 2020, TOPICS IN CRYPTOLOGY - CT-RSA 2020 : THE CRYPTOGRAPHERS' TRACK AT THE RSA CONFERENCE 2020, SAN FRANCISCO, CA, USA, FEBRUARY 24-28, 2020, SPRINGER, 201 OLIN LIBRARY CORNELL UNIVERSITY ITHACA, NY 14853, PAGE(S) 171 - 184, XP047554008

## Description

### BACKGROUND OF THE DISCLOSURE

### (a) Field of the Disclosure

The present disclosure relates to an energy storage system.

### (b) Description of the Related Art

An energy storage system (ESS) is a system that increases energy use efficiency by storing a large amount of electrical energy and supplying the stored electrical energy when electrical energy is needed.

Typically, the ESS may include a battery system, a battery management system (BMS) configured to manage the battery system, such as monitoring a voltage, current, temperature, etc. of the battery system, a power conversion system (PCS) configured to perform alternating current (AC)-direct current (DC) conversion and distribution functions, an energy management system (EMS) configured to control an entire system of the ESS in an integrated manner such as to control an energy flow of the ESS and to collect and manage information related to a status of the ESS. In addition, the battery system may include a plurality of battery racks electrically connected to each other. Each of the battery racks includes a plurality of battery modules electrically connected to each other, and each of the battery modules may include a plurality of cells electrically connected to each other.

In general, data transmission is performed between the BMS and the battery racks through controller area network (CAN) communication for safety and noise preparation. Accordingly, as a number of battery racks transmitting data to the BMS increases, transmission delay due to CAN communication increases. In addition, as a number of battery cells constituting each of the battery racks increases, a size of data processed by each battery rack and transmitted to the BMS also increases, so transmission delay may increase.

Recently, due to a safety issue of the ESS, a larger amount of information processing and faster transmission speed are required. Accordingly, conventionally, a method of limiting a scale of a battery system managed by one PCS has been used. However, when the scale of the battery system is limited, there is a limit to an application of the battery system, and thus another method for improving the data transmission speed of the ESS is required.

CN112467239A discloses a battery management device, energy storage device, and communication method.

### SUMMARY OF THE DISCLOSURE

A technical problem to be solved through the present disclosure is to provide an energy storage system with an improved data transfer speed from a battery system to a BMS, as defined in the appended claims.

### BRIEF DESCRIPTION OF THE DRAWINGS

FIG. 1 schematically illustrates an energy storage system according to an embodiment.
FIG. 2 illustrates a view for describing a communication method between using the first and second ports.

Each of the plurality of battery management systems may be configured to perform communication as a server using the first port and to perform communication as a client using the second port.

Different **IDs** may be assigned to the plurality of battery management systems, respectively, and **IPs** of the plurality of battery management systems may be automatically set according to the IDs.

Different **IDs** may be assigned to the plurality of battery management systems, respectively, and a plurality of data zones included in a transmission frame may be respectively allocated to the plurality of battery management systems according to the IDs.

Each of the plurality of battery management systems may be configured to update the transmission frame by adding state data of a corresponding battery bank to the transmission frame, and to transmit the updated transmission frame to a battery management system of an upper stage.

If the transmission frame is received from a battery management system of a lower stage, the plurality of battery management systems may be configured to update the transmission frame by adding state data of a corresponding battery bank to the transmission frame received from the battery management system of the lower stage.

The master battery management system among the plurality of battery management systems may be configured to receive, from a battery management system of a lower stage, the transmission frame including state data added by at least one slave battery management system among the plurality of battery management systems.

The energy management system may be configured to integrally manage an operation of the energy storage system and to communicate with the master battery management system through TCP/IP or UDP communication.

The energy management system may be configured to access the master battery management system to receive the transmission frame from the master battery management system.

Each of the plurality of battery banks may be configured to include a plurality of racks electrically connected to each other and communicating with each other through controller area network (CAN) communication. Each of the plurality of battery management systems may be configured to receive state data obtained from a plurality of battery modules constituting a corresponding rack among the plurality of racks in a daisy-chain manner based on CAN communication.

According to the present disclosure, transmission delay until a BMS collects data of battery racks constituting a battery system may be reduced. Accordingly, it is easy to increase a capacity of the battery system and also increase an amount of data processing.

At least some of the above and other features of the invention are set out in the claims.

### BRIEF DESCRIPTION OF THE DRAWINGS

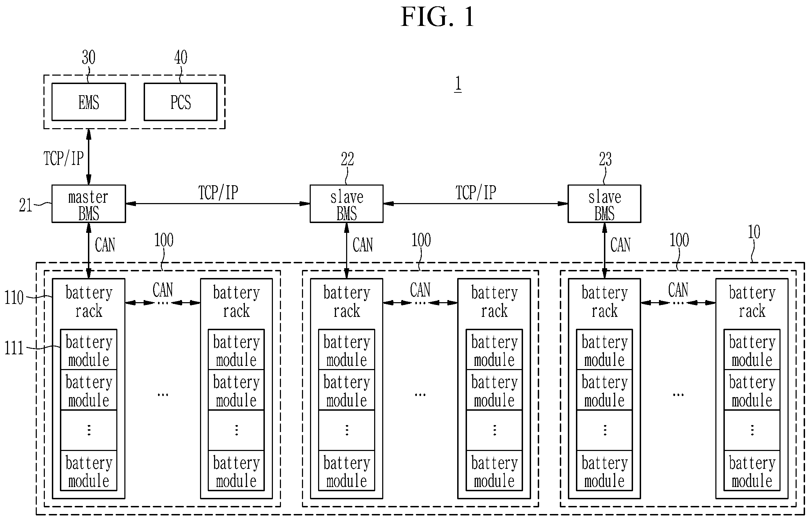

FIG. 1 schematically illustrates an energy storage system according to an embodiment.

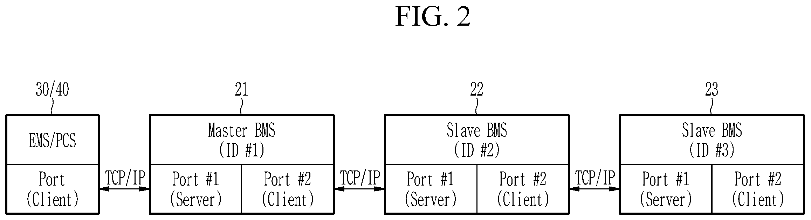

FIG. 2 illustrates a view for describing a communication method between battery management systems in an energy storage system according to an embodiment.

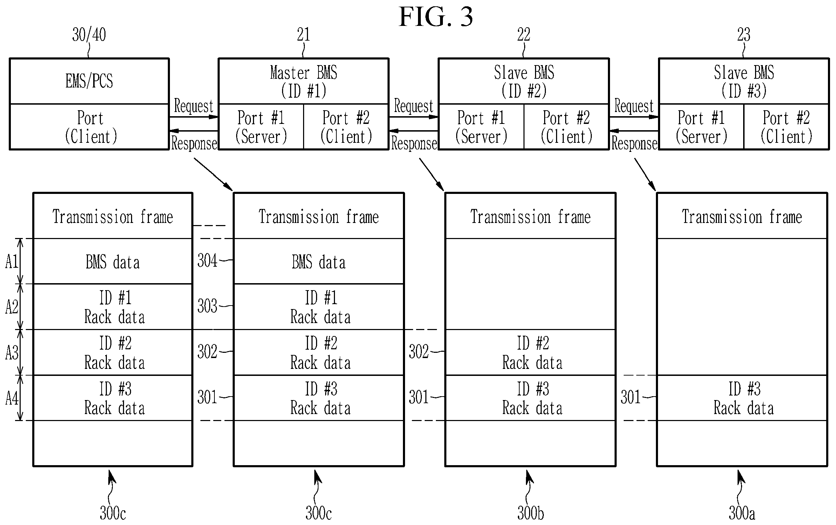

FIG. 3 illustrates a view for describing a method of transferring rack data collected by battery management systems in an energy storage system according to an embodiment.

### DETAILED DESCRIPTION OF THE EMBODIMENTS

Embodiments of the present disclosure will now be described in detail with reference to the accompanying drawings. Hereinafter, effects and characteristics of the embodiments and implementation methods thereof will be described in detail with reference to the accompanying drawings. In the drawings, like reference numerals denote like components, and redundant descriptions thereof are omitted. However, the present disclosure may be embodied in various forms, and should not be construed as being limited to the embodiments set forth herein. Rather, these embodiments are provided by way of example to make the present disclosure thorough and complete, and will fully convey aspects and features of the present disclosure to those skilled in the art.

Accordingly, processes, elements, and techniques deemed not necessary to those skilled in the art for complete understanding of aspects and features of the disclosure may not be described. In the drawings, the relative sizes of elements, layers, and regions may be exaggerated for clarity.

The term "and/or" in this document includes any or all combinations of multiple items listed in connection therewith. The use of "can/may" in describing an embodiment of the present disclosure indicates "at least one embodiment of the present disclosure."

Terms in the singular form in this document may include the plural form unless the context clearly dictates otherwise.

In this document, terms including ordinal numbers such as "first", "second", and "third" are used to describe various components, but these components are not limited by these terms. The terms are only used to differentiate one component from other components. For example, without departing from the scope rights described in this document, a first component may be referred to as a second component, and similarly, the second component may also be renamed as the first component.

In this document, when one component or layer is described as "on", "connected to", or "coupled" to another component or layer, "on", "connected to" and "coupled to" includes those formed directly or through the intervening of one or more other components or layers. In addition, when one component or layer is described as being "between" two components or layers, it should be understood that it is the only component or layer between two components or layers, or that there are one or more intervening other components or layers.

In this document, a case of electrically connecting two constituent elements includes not only a case of directly connecting the constituent elements but also a case of connecting the constituent elements via another constituent element therebetween. The constituent element therebetween may include a switch, a resistor, a capacitor, and the like. In describing embodiments, an expression of connection indicates electrical connection unless explicitly described to be direct connection.

Hereinafter, a battery system and an energy storage system (ESS) including the same according to embodiments will be described in detail with reference to necessary drawings.

FIG. 1 schematically illustrates an energy storage system according to an embodiment.

Referring to FIG. 1, an ESS 1 according to an embodiment includes a battery system 10, a plurality of battery management systems (BMS) 21 to 23, and an energy management system (EMS) 30, and a power conversion system (PCS) 40.

The battery system 10 may include a plurality of battery cells (not illustrated) connected in series or parallel to each other. For example, the battery system 10 may include a plurality of battery banks 100 electrically connected in series or parallel to each other, and each of the battery banks 100 may include a plurality of battery racks 110 electrically connected to each other in series or parallel. In addition, each of the battery racks 110 may include a plurality of battery modules 111 electrically connected in series or in parallel to each other, and each of the battery modules 111 may include a plurality of battery cells (not illustrated) electrically connected in series or in parallel to each other.

The battery system 10 may charge the battery cells using electrical energy supplied from a power system (not illustrated) through the PCS 40, and electrical energy stored in the battery cells may be supplied to a power system through the PCS 40.

The PCS 40 may operate as a power conversion device that converts electrical characteristics (direct current (DC), alternating current (AC), voltage, frequency, etc.) in order to transfer electrical energy between the battery system 10 and the power system. Typically, in the battery system 10, electrical energy in the form of direct current (DC) is used, and electrical energy in the form of alternating current (AC) is used in the power system. Accordingly, the PCS 40 may transfer electrical energy stored in the battery system 10 to the power system through direct current (DC)-alternating current (AC) conversion, and may transfer electrical energy supplied from the power system to the battery system 10 through alternating current (AC)-direct current (DC) conversion.

In addition to the power conversion and distribution functions described above, the PCS 40 may control quality of electricity such as active power and reactive power of the ESS 1, and may additionally perform a monitoring or control function of monitoring a voltage and an operating state of the ESS 1, a system-connected protection function of protecting the power system during a power outage, an independent operation function of operating the ESS 1 by utilizing the battery system 10, etc. even if there is no power.

The battery system 10 may be managed by BMSs 21, 22 and 23. The BMSs 21, 22, and 23 may monitor the state of the battery system 10 to control the battery system 10 to operate in an optimal state. To this end, the BMS 21, 22, and 23 may perform a state monitoring function of monitoring states (a voltage, a current, a temperature, a state of charge (SOC), a state of health (SOH), etc.) for the battery cells constituting the battery system 10, control functions (e.g., temperature control, cell balancing control, etc.), protection functions of preventing states (e.g., an over-discharge, an over-charge, an over-current, etc.). In this embodiment, each of the BMSs 21, 22, and 23 may manage an operation of the corresponding battery bank 100, and any one of the BMSs 21 to 23 (e.g., a master BMS 21) may manage operations of all battery banks 100 constituting the battery system 10.

Each of the BMSs 21, 22, and 23 may collect data related to the state of the battery cells (e.g. state data) from the corresponding battery bank 100 for state monitoring of the battery system 10. The battery racks 110 constituting each of the battery banks 100 may collect data related to the state of battery cells from the battery modules 111 belonging thereto, and may transmit the data to corresponding BMSs 21, 22, and 23. The battery racks 110 constituting each of the battery banks 100 may communicate with other battery racks 110 or corresponding BMSs 21, 22, 23 through controller area network (CAN) communication, and may transmit and receive data in a daisy chain manner. For example, BMS 23 is connected to BMS 22, and BMS 22 is connected to BMS 21 in a sequence or line.

Data collected from the battery racks 110 corresponding to each of the BMSs 21, 22, and 23 (hereinafter referred to as 'rack data') may be collected and managed by one master BMS 21. The slave BMSs 22 and 23 may transmit their collected rack data to the master BMS 21 in a daisy chain manner, and the master BMS 21 may manage them by combining them with the rack data which it collects. In addition, if data transmission is requested from the EMS 30, the master BMS 21 may collect the rack data received from the battery racks 110 to transfer it to the EMS 30.

The EMS 30 is an integrated control device that monitors and controls power use of the power system and power supply of the ESS 1 in real time for efficient energy management of the ESS 1. The EMS 30 monitors the state of the entire system constituting the ESS 1 (the battery system 10, the BMSs 21 to 23, and the PCS 40), and may control the operation of the ESS 1.

The EMS 30 may receive rack data collected from the battery system 10 and BMS data indicating a state of the BMS from the master BMS 21 in order to monitor the states of the battery system 10 and the BMS 21, 22, and 23.

In the meantime, if the master BMS 21 communicates with other BMSs 22 and 23 through CAN communication in a process of collecting rack data of each battery bank 100, a significant time delay may occur until rack data is received from the slave BMSs 22 and 23. Accordingly, in this embodiment, transmission control protocol/Internet protocol (TCP/IP) communication technology may be used in order to transmit and receive data between the BMSs 21, 22, and 23.

FIG. 2 illustrates a view for describing a communication method between the BMSs 21 to 23 in the ESS 1 according to an embodiment.

Referring to FIG. 2, the BMSs 21 to 23 may each include two physical TCP/IP ports P1 (Port #1) and P2 (Port #2) in order to implement a daisy chain transmission structure based on TCP/IP communication. Each of the BMS 21, 22, and 23 may communicate as a server using a port #1 and as a client using a port #2 among the two ports. That is, each of the BMSs 21, 22, and 23 may receive a data transmission request from another client through the port #1, and may transmit data to the corresponding client in response to the request. In addition, each of the BMSs 21, 22, and 23 may transmit a data transmission request to another server through the port #2, and may receive data from the corresponding server as a response to the request.

The master BMS 21 may also communicate with the EMS 30 and the PCS 40 based on TCP/IP. If the master BMS 21 receives a data transmission request through its own port #1 from the EMS 30 or the PCS 40 operating as a client, corresponding data may be transmitted to the EMS 30 or the PCS 40 through the port #1.

For TCP/IP communication, different identification information, i.e., different IDs may be allocated to the BMSs 21 to 23, respectively. Taking FIG. 2 as an example, ID #1 may be assigned to the master BMS 21, and ID #2 and ID #3 may be assigned to the slave BMSs 22 and 23, respectively. The ID of each of the BMS 21, 22, and 23 may be set by a manager of the ESS 1, and may also be set automatically by the EMS 30 or the master BMS 21. The ID assigned to each of the BMSs 21, 22, and 23 may be collected and managed by the master BMS 21.

If the IDs of the BMSs 21 to 23 are determined, an IP (internet protocol address) of each of the BMSs 21, 22, and 23 used for TCP/IP communication in the internal network system of the ESS 1 may be automatically set. In addition, each of the BMSs 21, 22, and 23 may be allocated a data zone within a transmission frame used in TCP/IP communication from the network system based on the ID assigned to it. Devices communicating through TCP/IP communication in the ESS 1 may transmit and receive data using Modbus protocol-based transmission frames.

If each of the BMS 21, 22, and 23 is assigned its own data zone within a transmission frame, rack data received from the corresponding battery bank 100 may be updated in a corresponding data zone.

FIG. 3 illustrates a view for describing a method of transferring rack data collected by the BMSs 21 to 23 in the ESS 1 according to an embodiment.

The slave BMS 23 may check that it is a slave BMS positioned in a lowest stage based on the ID assigned to each of the BMSs 21, 22, and 23. Accordingly, the slave BMS 23 omits an operation for receiving rack data from another BMS. The slave BMS 23 may check a data zone A4 (shown as 4 in FIG 3) assigned to it within a transport frame 300a based on its own ID (ID #3). If the slave BMS 23 receives rack data 301 from the battery bank 100 it manages, a transmission frame 300a may be updated by inserting the received rack data 301 into the data zone A4 allocated thereto.

If the slave BMS 23 receives a rack data transmission request from the slave BMS 22 positioned in its upper stage through its own port #1 (server), It may transmit the updated transmission frame 300a to the slave BMS 22 through its port #1 (server).

The slave BMS 22 may check that the slave BMS 23 is located in its lower stage based on the ID assigned to each of the BMSs 21, 22, and 23. The slave BMS 22 checking this may transmit a rack data transmission request to the slave BMS 23 through its own port #2 (client). Then, the slave BMS 22 may receive the transmission frame 300a from the slave BMS 23 through its own port #2 (client) as a response thereto. In addition, the slave BMS 22 may generate a transmission frame 300b by receiving rack data 302 from the battery bank 100 managed by the slave BMS 22 and updating the transmission frame 300a to include the same. The slave BMS 22 may check a data zone A3 (shown as 3 in FIG 3) assigned to it within the transmission frame 300a based on its own ID (ID #2),and may insert the rack data 302 into the corresponding data zone A3.

If the slave BMS 22 receives a rack data transmission request from the master BMS 21 through its own port #1 (server), it may transmit the generated transmission frame 300b to the master BMS 21 through its port #1 (server).

The master BMS 21 may check that it is the master BMS based on the ID assigned to each of the BMSs 21, 22, and 23, and may also check how many slave BMSs 22 and 23 are connected to the battery system 10. After checking this, the master BMS 21 may transmit a rack data transmission request to the slave BMS 22 positioned in its lower stage using the IDs (ID #2 and ID #3) assigned to each of the slave BMSs 22 and 23. Then, the master BMS 21 may receive the transmission frame 300b from the slave BMS 22 through its own port #2 (client) as a response thereto. In addition, the master BMS 21 may generate a transmission frame 300c by receiving rack data 303 from the battery bank 100 managed by the master BMS 21 and updating the transmission frame 300b to include the same. The master BMS 21 may check a data zone A2 (shown as 2 in FIG 3) assigned to it within the transmission frame 300b based on its own ID (ID #1), and may insert the rack data 303 into the corresponding data zone A2.

The transmission frame may further include the data zone A1 (shown as 1 in FIG 3) allocated to BMS data 304. In this case, the master BMS 21 may insert BMS data into the data zone A1 allocated to the BMS data 304 in a transmission frame 300c. The BMS data 304 may include information obtained by monitoring the battery system 10 by the BMS 21, 22, and 23, control state information of the battery system 10, and the like.

If the master BMS 21 receives a data transmission request from the EMS 30 or the PCS 40 through its own port #1 (server), and the last updated transmission frame 300c may be transmitted to the EMS 30 or the PCS 40 through its own port #1 (server). Accordingly, if the rack data of the battery system 10 is required, the EMS 30 or the PCS 40 may obtain rack data of all battery racks 110 constituting the battery system 10 by accessing only the master BMS 21.

As described above, in the ESS 1 according to this embodiment, the battery system 10 may be divided into the battery banks 100, and rack data of each of the battery banks 100 may be collected by different BMSs 21, 22, and 23. In addition, rack data collected by each of the BMSs 21, 22, and 23 may be transmitted to the master BMS 21 in a daisy-chain manner through TCP/IP communication for collection and management. In this process, a path through which each of the BMSs 21, 22, and 23 receives transmission frames from other BMSs and a path through which each of the BMSs 21, 22, and 23 receives rack data from the corresponding battery bank 100 may be distinguished, and thus both operations may be performed in parallel. Accordingly, a time delay until the master BMS 21 collects rack data of all battery racks 110 constituting the battery system 10 may be shortened.

In the meanwhile, in FIG. 1 to FIG. 3, a number of battery banks 100 constituting the battery system 10 is three, and accordingly, a case where a number of BMSs is also three is illustrated as an example. However, numbers of battery banks 100 and BMSs may be changed according to a capacity required for the ESS 1 and the like.

In addition, in the above-described embodiment, a case of using TCP/IP communication technology has been described as an example in order to transmit or receive data in daisy chain between the BMSs 21, 22, and 23 and for the master BMS 21 to communicate with the EMS 30 or the PCS 40, but other communication methods may be used for these communications. For example, in another embodiment, user datagram protocol (UDP) communication technology may be used to transmit and receive data between the BMSs 21, 22, and 23 in a daisy chain manner. In addition, for example, in another embodiment, the UDP communication technology may be used to communicate with the master BMS 21 and the EMS 30 or the PCS 40. Even when using UDP communication technology, the same method as in the above-described embodiment may be used for a communication structure of a daisy chain method through a port, a method for allocating a data zone within a transmission frame, and the like.

While embodiments of the present disclosure have been particularly shown and described with reference to the accompanying drawings, the specific terms used herein are only for the purpose of describing the disclosure and are not intended to define the meanings thereof or be limiting of the scope of the disclosure set forth in the claims. Therefore, a person of ordinary skill in the art will understand that various modifications and other equivalent embodiments of the present disclosure are possible. Consequently, the true technical protective scope of the present disclosure must be determined based on the scope of the appended claims.

### <Description of Symbols>

1: ESS
10: battery system
21, 22, 23: BMS
30: EMS
40: PCS
100: battery bank
110: battery rack
111: battery module

## Claims

1. An energy storage system (1) comprising:
a battery system (10) configured to include a plurality of battery banks (100) electrically connected to each other; and
a plurality of battery management systems (21, 22, 23) each configured to communicate with the plurality of battery banks (100) and to receive state data from a corresponding battery bank (100) among the plurality of battery banks (100),
wherein each of the plurality of battery management systems (21, 22, 23) is configured to include first and second ports for transmission control protocol/Internet protocol, TCP/IP, or for user datagram protocol, UDP, communication, and to communicate in a daisy-chain manner with others of the plurality of battery management systems (21, 22, 23) using the first and second ports, and
wherein different IDs are assigned to the plurality of battery management systems (21, 22, 23), respectively, and
a plurality of data zones included in a transmission frame are respectively allocated to the plurality of battery management systems (21, 22, 23) according to the IDs.

2. The energy storage system (1) of claim 1, wherein:
each of the plurality of battery management systems (21, 22, 23) is configured to perform communication as a server using the first port and to perform communication as a client using the second port.

3. The energy storage system (1) of claim 1 or 2, wherein
different IDs are assigned to the plurality of battery management systems (21, 22, 23), respectively, and
internet protocol addresses, IPs, of the plurality of battery management systems (21, 22, 23) are automatically set according to the IDs.

4. The energy storage system (1) of any preceding claim, wherein:
each of the plurality of battery management systems (21, 22, 23) is configured to update the transmission frame by adding state data of a corresponding battery bank (100) to the transmission frame, and to transmit the updated transmission frame to a battery management system (21, 22, 23) of an upper stage.

5. The energy storage system (1) of claim 4, wherein:
if the transmission frame is received from a battery management system (21, 22, 23) of a lower stage, the plurality of battery management systems (21, 22, 23) is configured to update the transmission frame by adding state data of a corresponding battery bank (100) to the transmission frame received from the battery management system (21, 22, 23) of the lower stage.

6. The energy storage system (1) of claim 5, wherein:
a master battery management system (21) among the plurality of battery management systems is configured to receive, from a battery management system (22, 23) of a lower stage, the transmission frame including state data added by at least one slave battery management system (22, 23) among the plurality of battery management systems.

7. The energy storage system (1) of claim 6, further comprising:
an energy management system (30) configured to integrally manage an operation of the energy storage system (1) and to communicate with the master battery management system (21) through TCP/IP or UDP communication,
wherein the energy management system (30) is configured to access the master battery management system (21) to receive the transmission frame from the master battery management system (21).

8. The energy storage system (1) of any preceding claim, wherein
each of the plurality of battery banks (100) is configured to include a plurality of racks electrically connected to each other and communicating with each other through controller area network, CAN, communication, and
each of the plurality of battery management systems (21, 22, 23) is configured to receive state data obtained from a plurality of battery modules constituting a corresponding rack among the plurality of racks in a daisy-chain manner based on CAN communication.

## Patentansprüche

1. Energiespeichersystem (1) umfassend:
ein Batteriesystem (10), das so konfiguriert ist, dass es eine Vielzahl von elektrisch miteinander verbundenen Batteriebänken (100) beinhaltet; und
eine Vielzahl von Batteriemanagementsystemen (21, 22, 23), die jeweils so konfiguriert sind, dass sie mit der Vielzahl von Batteriebänken (100) kommunizieren und Zustandsdaten von einer entsprechenden Batteriebank (100) unter der Vielzahl von Batteriebänken (100) empfangen,
wobei jedes der Vielzahl von Batteriemanagementsystemen (21, 22, 23) so konfiguriert ist, dass es einen ersten und einen zweiten Anschluss für Kommunikation mittels Übertragungssteuerungsprotokoll/Internet-Protokoll, TCP/IP, oder User Datagram Protocol, UDP, beinhaltet und kettenförmig mit anderen der Vielzahl von Batteriemanagementsystemen (21, 22, 23) unter Verwendung des ersten und zweiten Anschlusses kommuniziert, und
wobei der Vielzahl von Batteriemanagementsystemen (21, 22, 23) jeweils unterschiedliche IDs zugewiesen sind und
eine Vielzahl von Datenzonen, die in einem Übertragungsrahmen beinhaltet sind, jeweils der Vielzahl von Batteriemanagementsystemen (21, 22, 23) gemäß den IDs zugeordnet sind.

2. Energiespeichersystem (1) nach Anspruch 1, wobei:
jedes der Vielzahl von Batteriemanagementsystemen (21, 22, 23) so konfiguriert ist, dass es Kommunikation über den ersten Anschluss als Server durchführt und Kommunikation über den zweiten Anschluss als Client durchführt.

3. Energiespeichersystem (1) nach Anspruch 1 oder 2, wobei
der Vielzahl von Batteriemanagementsystemen (21, 22, 23) jeweils unterschiedliche IDs zugewiesen sind und
Internetprotokolladressen, IPs, der Vielzahl von Batteriemanagementsystemen (21, 22, 23) automatisch anhand der IDs festgelegt werden.

4. Energiespeichersystem (1) nach einem vorstehenden Anspruch, wobei:
jedes der Vielzahl von Batteriemanagementsystemen (21, 22, 23) so konfiguriert ist, dass es den Übertragungsrahmen aktualisiert, indem es Zustandsdaten einer entsprechenden Batteriebank (100) zum Übertragungsrahmen hinzufügt und den aktualisierten Übertragungsrahmen an ein Batteriemanagementsystem (21, 22, 23) einer oberen Stufe sendet.

5. Energiespeichersystem (1) nach Anspruch 4, wobei:
wenn der Übertragungsrahmen von einem Batteriemanagementsystem (21, 22, 23) einer unteren Stufe empfangen wird, die Vielzahl von Batteriemanagementsystemen (21, 22, 23) so konfiguriert ist, dass sie den Übertragungsrahmen aktualisiert, indem sie Zustandsdaten einer entsprechenden Batteriebank (100) zu dem vom Batteriemanagementsystem (21, 22, 23) der unteren Stufe empfangenen Übertragungsrahmen hinzufügt.

6. Energiespeichersystem (1) nach Anspruch 5, wobei:
ein Master-Batteriemanagementsystem (21) aus der Vielzahl von Batteriemanagementsystemen so konfiguriert ist, dass es von einem Batteriemanagementsystem (22, 23) einer unteren Stufe den Übertragungsrahmen empfängt, der die von mindestens einem Slave-Batteriemanagementsystem (22, 23) aus der Vielzahl von Batteriemanagementsystemen hinzugefügten Zustandsdaten beinhaltet.

7. Energiespeichersystem (1) nach Anspruch 6, weiter umfassend:
ein Energiemanagementsystem (30), das so konfiguriert ist, dass es einen Betrieb des Energiespeichersystems (1) integral steuert und mit dem Master-Batteriemanagementsystem (21) durch TCP/IP- oder UDP-Kommunikation kommuniziert,
wobei das Energiemanagementsystem (30) so konfiguriert ist, dass es auf das Master-Batteriemanagementsystem (21) zugreift, um den Übertragungsrahmen vom Master-Batteriemanagementsystem (21) zu empfangen.

8. Energiespeichersystem (1) nach einem vorstehenden Anspruch, wobei
jede der Vielzahl von Batteriebänken (100) so konfiguriert ist, dass sie eine Vielzahl von Racks umfasst, die elektrisch miteinander verbunden sind und über Controller Area Network, CAN, Kommunikation miteinander kommunizieren, und
jedes der Vielzahl von Batteriemanagementsystemen (21, 22, 23) so konfiguriert ist, dass es Zustandsdaten, die von einer Vielzahl von Batteriemodulen erhalten werden, die ein entsprechendes Rack aus der Vielzahl von Racks bilden, kettenförmig auf Basis von CAN-Kommunikation empfängt.

## Revendications

1. Système de stockage d'énergie (1) comprenant :
un système de batteries (10) configuré pour inclure une pluralité de bancs de batteries (100) connectés électriquement entre eux ; et
une pluralité de systèmes de gestion de batteries (21, 22, 23) configurés chacun pour communiquer avec la pluralité de bancs de batteries (100) et pour recevoir des données d'état d'un banc de batteries correspondant (100) parmi la pluralité de bancs de batteries (100),
dans lequel chacun de la pluralité de systèmes de gestion de batteries (21, 22, 23) est configuré pour inclure des premier et second ports pour la communication par protocole de contrôle de transmission/protocole Internet, TCP/IP, ou protocole de datagramme utilisateur, UDP, et pour communiquer en chaîne avec d'autres systèmes de gestion de batteries de la pluralité de systèmes de gestion de batteries (21, 22, 23) en utilisant les premier et second ports, et
dans lequel différents identifiants sont attribués respectivement à la pluralité de systèmes de gestion de batteries (21, 22, 23), et
une pluralité de zones de données incluses dans une trame de transmission sont respectivement allouées à la pluralité de systèmes de gestion de batteries (21, 22, 23) selon les identifiants.

2. Système de stockage d'énergie (1) selon la revendication 1, dans lequel :
chacun de la pluralité de systèmes de gestion de batteries (21, 22, 23) est configuré pour effectuer une communication en tant que serveur en utilisant le premier port et pour effectuer une communication en tant que client en utilisant le second port.

3. Système de stockage d'énergie (1) selon la revendication 1 ou 2, dans lequel
différents identifiants sont attribués respectivement à la pluralité de systèmes de gestion de batteries (21, 22, 23), et
des adresses de protocole Internet, IP, de la pluralité des systèmes de gestion de batteries (21, 22, 23) sont automatiquement définies en fonction des identifiants.

4. Système de stockage d'énergie (1) selon une quelconque revendication précédente, dans lequel :
chacun de la pluralité de systèmes de gestion de batteries (21, 22, 23) est configuré pour mettre à jour la trame de transmission en ajoutant des données d'état d'un banc de batterie correspondant (100) à la trame de transmission, et pour transmettre la trame de transmission mise à jour à un système de gestion de batteries (21, 22, 23) d'un étage supérieur.

5. Système de stockage d'énergie (1) selon la revendication 4, dans lequel :
si la trame de transmission est reçue d'un système de gestion de batteries (21, 22, 23) d'un étage inférieur, la pluralité de systèmes de gestion de batteries (21, 22, 23) est configurée pour mettre à jour la trame de transmission en ajoutant les données d'état d'un banc de batterie correspondant (100) à la trame de transmission reçue du système de gestion de batteries (21, 22, 23) de l'étage inférieur.

6. Système de stockage d'énergie (1) selon la revendication 5, dans lequel :
un système maître de gestion de batteries (21) parmi la pluralité de systèmes de gestion de batteries est configuré pour recevoir, d'un système de gestion de batteries (22, 23) d'un étage inférieur, la trame de transmission incluant des données d'état ajoutées par au moins un système esclave de gestion de batteries (22, 23) parmi la pluralité de systèmes de gestion de batteries.

7. Système de stockage d'énergie (1) de la revendication 6, comprenant en outre :
un système de gestion d'énergie (30) configuré pour gérer de manière intégrale le fonctionnement du système de stockage d'énergie (1) et pour communiquer avec le système maître de gestion de batteries (21) par l'intermédiaire de la communication TCP/IP ou UDP,
dans lequel le système de gestion d'énergie (30) est configuré pour accéder au système maître de gestion de batteries (21) afin de recevoir la trame de transmission du système maître de gestion de batteries (21).

8. Système de stockage d'énergie (1) selon une quelconque revendication précédente, dans lequel
chacun de la pluralité de bancs de batteries (100) est configuré pour inclure une pluralité de racks connectés électriquement entre eux et communiquant entre eux par une communication de réseau local de commande, CAN, et
chacun de la pluralité de systèmes de gestion de batteries (21, 22, 23) est configuré pour recevoir des données d'état obtenues à partir d'une pluralité de modules de batterie constituant un rack correspondant parmi la pluralité de racks en chaîne sur la base de la communication CAN.
